# EUROPEAN PATENT SPECIFICATION

(11) **EP 1 527 606 B1**
(45) Date of publication and mention of the grant of the patent: **12.11.2008**
(21) Application number: 03738422.9
(22) Date of filing: 25.06.2003
(51) Int. Cl.: H04N 7/18, B60R 1/00

(54) **VIEWING SYSTEM**
DARSTELLUNGSVORRICHTUNG
SYSTEME DE VISUALISATION

(30) Priority: 25.07.2002 EP 02078037
(43) Date of publication of application: 04.05.2005
(73) Proprietor: Koninklijke Philips Electronics N.V., 5621 BA Eindhoven (NL)
(72) Inventor: DIEDERIKS, Elmo, M., A., NL-5656 AA Eindhoven (NL); EGGEN, Josephus, H., NL-5656 AA Eindhoven (NL)
(74) Representative: Gravendeel, Cornelis
(86) International application number: PCT/IB2003/002893
(87) International publication number: WO 2004/012456

(56) References cited:
- EP-A- 0 830 985
- EP-A- 1 061 376
- DE-U- 29 612 536
- US-B1- 6 421 081

## Description

### FIELD OF THE INVENTION

The present invention relates to a viewing system comprising display means and an imaging system connected to the display means, the display means being arranged to display an image based on signals received from the imaging system, the spatial orientation of the display means being adjustable and the imaging system comprising orientation adjusting means arranged to adjust the viewing orientation of the imaging system.

The present invention could for instance be used as a rear-view system in a vehicle, such as a car or a truck.

### BACKGROUND OF THE INVENTION

Vehicles, such as cars or trucks, are often equipped with rear-view mirrors to provide the driver with rear views. This helps the driver to safely manoeuvre the vehicle. Most cars have one or two mirrors positioned on the outside of the vehicle on the left and/or right hand side, to provide rear views of the left- and/or right-hand side of the car respectively. Most cars also have one internal mirror, located in the middle of the vehicle in front of the driver. This internal mirror provides the driver with a view of the central rear view through the rear window of the vehicle.

However, such rear-view mirrors do not always provide the driver with a clear view. For instance, if the view is (partly) blocked by a load or a passenger, the driver will not get a clear rear view. Also, such internal mirrors can not be used in most trucks, because trucks often do not have a rear window.

Rear-view viewing systems are known that provide a solution to the above mentioned problems. For instance, UK Patent Application GB 2 327 823-A discloses a rear-view viewing system that uses video cameras, video signal transmitting means and an electronic display screen. The video cameras register an image of the rear view and transmit this image via the video signal transmitting means to the electronic display screen in front of the driver. This system does not suffer from loads or passengers blocking the view of the driver. The viewing direction of the video cameras is adjustable.

However, adjusting the orientation of the video cameras needs to be done using special additional orientation adjusting means, such as buttons. This makes the use of the system not straightforward for a driver that is used to traditional rear-view mirrors.

### SUMMARY OF THE INVENTION

The present invention seeks to provide a system that combines the advantages of advanced viewing systems and the straightforward use of traditional viewing systems,

According to the present invention, a viewing system is provided of the type defined in the preamble above, according to claim 1.

The fact that the orientation of the viewing system according to the present invention can be adjusted by adjusting the orientation of the display means, enables users inexperience with such viewing systems to use the viewing systems without extra education, because the use of the system is straightforward.

The imaging system can comprise one or more cameras chosen from the group of: rear-view camera; interior camera; tire camera; blind angle camera. Such a viewing system provides the driver with images which would otherwise be out of sight. This helps the driver to safely manoeuvre the vehicle, or monitor spaces otherwise invisible.

The imaging system can further comprise image processing means arranged to process the image registered by the one or more cameras. Such imaging processing means can improve the quality of an image, providing a better view to the driven.

The image processing means can be arranged to process additional information concerning the status of the vehicle or its surroundings, such as information about the weather conditions, the time and date, route information or the distance to obstacles, for display on the display means. The image processing means can also be arranged to display one or more images at the same time or one after the other on the display means and can further comprise selection means connected to the image processing means to select which image and/or which additional information is displayed by the display means. This makes it possible to easily provide the driver with additional information, without the need for extra display means and providing the driver the possibility to decide what information he wants to be displayed.

In a further embodiment the display means are positioned as a rear-view mirror in a vehicle and are adjustable in a tilt and a pan direction. This has the benefit that no additional or different skills are required by the driver in order to use the viewing system. The interaction between the driver and the present viewing system is similar to a traditional rear-view mirror.

In yet another embodiment of the present invention the image processing means are arranged to eliminate high lights in the registered image. The driver will not be troubled by blinding lights of cars or other blinding effects, increasing the safety of the driver and other road users.

These and other aspects of the invention will be apparent from and elucidated with reference to the embodiments described hereinafter.

### BRIEF DESCRIPTION OF THE DRAWINGS

The present invention will now be discussed in more detail using a number of exemplary embodiments, with reference to the drawings, which are only intended to illustrate the present invention and not to limit its scope which is only limited by the appended claims:
Figure 1 shows a preferred embodiment of the present invention,
Figure 2 is a block diagram of a preferred embodiment of the present invention.

### DESCRIPTION OF THE PREFERRED EMBODIMENTS

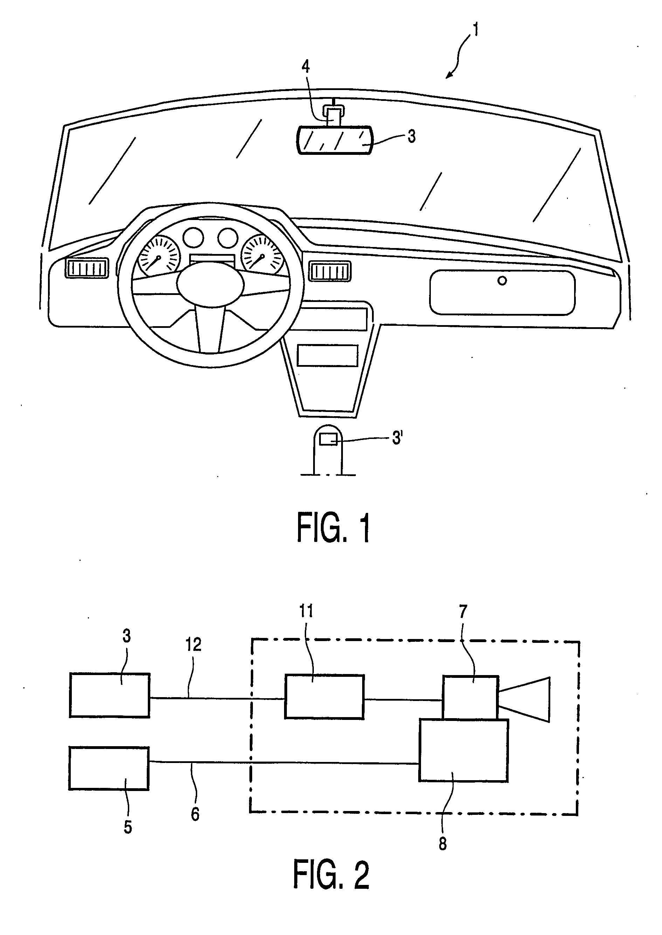

Figure 1 shows a view of a vehicle 1, for instance a car, driven by a driver. The vehicle 1 further comprises display means 3, adjustably attached to the roof of the vehicle 1 via mounting means 4. The display means 3 are preferably positioned at the same position as traditional rear-view mirrors, so it can, for instance, also be attached to the front window or to the dashboard (see 3' in figure 1), but can also be positioned on other positions in the vehicle 1.

As can be seen in figure 2 also a sensor 5 is provided that registers the orientation of the display means 3. This sensor 5 can be provided integrated with mounting means 4 or can be attached to the mounting means 4, or can be provided in other ways, as will be understood by a person skilled in the art. The sensor 5 is connected to adjusting means 8, e.g. using a communication channel 6. The adjusting means 8 support a camera 7 and can change the viewing orientation of the camera 7, e.g. in pan and tilt direction.

Energy required to adjust the orientation of the camera 7 can be taken from the car battery (not shown).

The camera 7 registers an image of the rear view from the vehicle 1. The camera 7 can be a video camera, a CCD-camera or any other known type of camera. The image is transmitted to the display means 3 via communication channel 12. This communication channel 12 can be a copper wire, or any other type of wire known to a person skilled in the art, but the communication channel 12 can also be a wireless communication channel. The display means 3 are arranged to display the image received from the camera 7. This can be done by using a TV-screen or a LCD or any other type of display means 3 known to a person skilled in the art.

The driver can watch the image on the display means 3. If the vehicle 1 comprises, for instance, a load, this load will not obstruct the view of the driver 2. If the driver wants to change the orientation of the camera 7, because he wants to see more from, for instance, the left side of the vehicle 1, the driver can adjust the orientation of the camera 7 by changing the orientation of the display means 3 in a similar way as if it were a traditional rear-view mirror. Any change in the orientation of the display means 3 is registered by the sensor 5. According to the information registered by the sensor 5, the sensor 5 transmits signals comprising information about the change in orientation of the display means 3 to the orientation adjusting means 8 via communication channel 6.

The orientation adjusting means 8 adjust the orientation of the camera 7 according to the received signals. The orientation adjusting means 8 may comprise a processor arranged to determine the appropriate adjustment of the viewing orientation of the camera 7. An appropriate adjustment is an adjustment that changes the image displayed on the display means 3 similar as when the orientation of a traditional rear-view mirror would have been changed by the driver.

The adjustment of the orientation of the camera 7 can be a rotation in a substantially horizontal plane (pan), but can also be a rotation in a substantially vertical plane (tilt).

In a preferred embodiment the rear-view system comprises image processing means 11 to process the image registered by the camera 7. Image processing can be done, for instance, to compensate for blinding lights of cars or a low sun position. In the specific case of using the camera as a rear-view camera, the processing means can be arranged to reverse the left-right orientation of the image. Displaying the reversed image on the display means will give the driver of the vehicle 1 the impression of watching a known rear-view mirror.

In a further embodiment the display means 3 are connected to more than one camera 7. The display means 3 can be connected with cameras that register, for instance, the back seat or a tire or any other part of the vehicle 1 or its surroundings. Of course, camera 7 can also be used to monitor the blind angles from a truck. The images of the different cameras can all be displayed by the display means 3. All images can be displayed at the same time by dividing the display in different parts, each part displaying an image received from a different camera 7. It also possible to provide the driver with selection means to select which of the images is displayed by the display means 3.

Also, the display means 3 can be used to display additional information in the display of the display means 3. This can be information about the weather conditions, the time and date, route information, the velocity of the vehicle, but can also be information that is specially useful when driving backwards, such as the distance to obstacles behind the vehicle 1. The driver can be provided with selection means to select which information is displayed, but the information can also be automatically be displayed when the engine of the vehicle is started or when driving backwards.

In the embodiment discussed above, two communication channels 6,12 are provided for transmitting signals from the sensor 5 to the adjusting means 8 and from the camera 7 and processing means 11 to the display means 3, respectively. Of course, communication channel 6 and 12 can also be one and the same communication channel, providing communication in both directions and can also be a wireless communication channel.

For the purpose of teaching the invention, preferred embodiments of the method and devices of the invention were described. It will be apparent for the person skilled in the art that other alternative and equivalent embodiments of the invention can be conceived and reduced to practice without departing from the scope of the invention, being only limited by the annexed claims.

## Claims

1. Viewing system comprising display means (3) and an imaging system (7) connected to the display means (3),
the display means being arranged to display an image based on signals received from the imaging system (7),
the spatial orientation of the display means (3) being adjustable and
the imaging system (7) comprising orientation adjusting means (8) arranged to adjust the viewing orientation of the imaging system (7),
**characterized in that**
the imaging system (7) comprises one or more cameras positioned in a vehicle (1),
the viewing system further comprises sensor means for detecting adjustments in the orientation of the display means (3), the sensor means being connected to the orientation adjusting means (8) and
the orientation adjusting means (8) being arranged to adjust the viewing orientation of the imaging system (7) based on signals received from the sensor means.

2. Viewing system according to claim 1, **characterized in that** the imaging system (7) comprises one or more cameras chosen from the group of: rear-view camera; interior camera; tire camera; blind angle camera.

3. Viewing system according to claim 1, **characterized in that** the imaging system (7) comprises image processing means (11) arranged to process the registered image.

4. Viewing system according to claim 3, **characterized in that** the image processing means (11) are arranged to process additional information concerning the status of the vehicle (1) or its surroundings for display on the display means (3).

5. Viewing system according to claim 3, **characterized in that** the image processing means (11) are arranged to display one or more images at the same time or one after the other on the display means (3).

6. Viewing system according to claim 4, **characterized in that** the viewing system further comprises selection means connected to the image processing means (11) to select which image and/or which additional information is displayed by the display means (3).

7. Viewing system according to claim 1, in which the display means (3) are positioned as a rear-view mirror in a vehicle (1).

8. Viewing system according to claim 1, in which the display means (3) are adjustable in a tilt and a pan direction.

9. Viewing system according to claim 1, in which the image processing means (11) are arranged to eliminate high lights in the registered image.

## Patentansprüche

1. Darstellungssystem mit Wiedergabemitteln (3) und einem mit den Wiedergabemitteln (3) verbundenen Bilderzeugungssystem (7),
wobei die Wiedergabemittel zum Wiedergeben eines Bildes vorgesehen sind, und zwar auf Basis von dem Bilderzeugungssystem (7) empfangener Signale,
wobei die räumliche Orientierung der Wiedergabemittel (3) einstellbar ist und
wobei das Bilderzeugungssystem (7) Orientierungseinstellmittel (8) aufweist, vorgesehen zum Einstellen der Sichtorientierung des Bilderzeugungssystems (7).
**dadurch gekennzeichnet, dass**
das Bilderzeugungssystem (7) eine oder mehrere in einem Fahrzeug (1) aufgestellte Kameras umfasst,
das Darstellungssystem weiterhin Sensormittel aufweist zum Detektieren von Einstellungen in der Orientierung der Wiedergabemittel (3), wobei die Sensormittel mit den die Orientierung einstellenden Mitteln (8) verbunden sind, und
die Orientierungseinstellmittel (8) dazu vorgesehen sind, die Sichtorientierung des Bilderzeugungssystems (7) auf Basis von den Sensormitteln empfangener Signale einzustellen.

2. Darstellungssystem nach Anspruch 1, **dadurch gekennzeichnet, dass** das Bilderzeugungssystem (7) eine oder mehrere Kameras aufweist, gewählt aus der Gruppe: Rückblickkamera, Innenraumkamera, Reifenkamera, Toter-Winkelkamera.

3. Darstellungssystem nach Anspruch 1, **dadurch gekennzeichnet, dass** das Bilderzeugungssystem (7) Bildverarbeitungsmittel (11) umfasst, vorgesehen zum Verarbeiten des erfassten Bildes.

4. Darstellungssystem nach Anspruch 3, **dadurch gekennzeichnet, dass** die Bildverarbeitungsmittel (11) dazu vorgesehen sind, zusätzliche Information in Bezug auf den Zustand des Fahrzeugs (1) oder in Bezug auf die Umgebung zur Wiedergabe an den Wiedergabemitteln (3) zu verarbeiten.

5. Darstellungssystem nach Anspruch 3, **dadurch gekennzeichnet, dass** die Bildverarbeitungsmittel (11) dazu vorsehen sind, ein oder mehrere Bilder gleichzeitig oder nacheinander an den Wiedergabemitteln (3) wiederzugeben.

6. Darstellungssystem nach Anspruch 4, **dadurch gekennzeichnet, dass** das Darstellungssystem weiterhin Selektionsmittel umfasst, die mit den Bildverarbeitungsmitteln (11) verbunden sind, und zwar zum Selektieren welches Bild und/oder welche zusätzliche Information von den Wiedergabemitteln (3) wiedergegeben werden soll bzw. sollen.

7. Darstellungssystem nach Anspruch 1, wobei die Wiedergabemittel (3) als Rückblickspiegel in einem Fahrzeug (1) vorgesehen sind.

8. Darstellungssystem nach Anspruch 1, wobei die Wiedergabemittel (3) in einer Kipp- und Schwenkrichtung einstellbar sind.

9. Darstellungssystem nach Anspruch 1, wobei die Bildverarbeitungsmittel (11) zum Eliminieren von Scheinwerfern in dem erfassten Bild vorgesehen sind.

## Revendications

1. Système de visualisation comprenant des moyens d'affichage (3) et un système d'imagerie (7) qui est relié aux moyens d'affichage (3),
les moyens d'affichage étant agencés de manière à afficher une image sur la base de signaux qui sont reçus du système d'imagerie (7),
l'orientation spatiale des moyens d'affichage (3) étant réglable, et
le système d'imagerie (7) comprenant des moyens de réglage d'orientation (8) pour régler l'orientation de vision du système d'imagerie (7),
**caractérisé en ce que**
le système d'imagerie (7) comprend une ou plusieurs caméras qui sont positionnées dans un véhicule (1),
le système de visualisation comprend encore des moyens de capteur pour détecter les réglages de l'orientation des moyens d'affichage (3), les moyens de capteur étant reliés aux moyens de réglage d'orientation (8), et
les moyens de réglage d'orientation (8) étant agencés de manière à régler l'orientation de vision du système d'imagerie (7) sur la base des signaux qui sont reçus des moyens de capteur.

2. Système de visualisation selon la revendication 1, **caractérisé en ce que** le système d'imagerie (7) comprend une ou plusieurs caméras qui sont choisies parmi le groupe constitué d'une caméra de vue arrière, d'une caméra de l'intérieur, d'une caméra de pneus et d'une caméra d'angle mort.

3. Système de visualisation selon la revendication 1, **caractérisé en ce que** le système d'imagerie (7) comprend des moyens de traitement d'image (11) qui sont agencés de manière à traiter l'image enregistrée.

4. Système de visualisation selon la revendication 3, **caractérisé en ce que** les moyens de traitement d'image (11) sont agencés de manière à traiter de l'information additionnelle relative à l'état du véhicule (1) ou de ses environs pour être affichée sur les moyens d'affichage (3).

5. Système de visualisation selon la revendication 3, **caractérisé en ce que** les moyens de traitement d'image (11) sont agencés de manière à afficher une ou plusieurs images en même temps ou l'une après l'autre sur les moyens d'affichage (3).

6. Système de visualisation selon la revendication 4, **caractérisé en ce que** le système de visualisation comprend encore des moyens de sélection qui sont reliés aux moyens de traitement d'image (11) pour sélectionner quelle image et/ou quelle information additionnelle est affichée par les moyens d'affichage (3).

7. Système de visualisation selon la revendication 1, dans lequel les moyens d'affichage (3) sont positionnés en tant qu'un rétroviseur dans un véhicule (1).

8. Système de visualisation selon la revendication 1, dans lequel les moyens d'affichage (3) sont réglables dans une direction d'inclinaison et panoramique.

9. Système de visualisation selon la revendication 1, dans lequel les moyens de traitement d'image (11) sont agencés de manière à éliminer les points culminants dans l'image enregistrée.
